# EUROPEAN PATENT APPLICATION

(11) **EP 2 502 846 A1**
(43) Date of publication of application: **26.09.2012**
(21) Application number: 11425073.1
(22) Date of filing: 23.03.2011
(51) Int. Cl.: B65D 51/20, B65D 81/34

(54) **A packaged food product for children**

(71) Applicant: Industrie Rolli Alimentari S.p.A., 64026 Roseto degli Abruzzi (Teramo) (IT)
(72) Inventor: Rolli, Gian Paolo, 43035 Felino (Parma) (IT)
(74) Representative: Monelli, Alberto

(57) **Abstract**

A packaged food product for children, characterised in that it comprises:
- deep-frozen food for children;
- a cup container (3) containing said food and positionable in a microwave oven such as to heat the contents, said container (3) comprising an access opening (4) to a zone (5) housing the food.

## Description

The present invention relates to a packaged food product for children typically from 12 months upwards in age. The object of the present invention is also a preparation method of food present in said product.

Food products are known which contain synthetic vitamins and chemical additives for conservation. These food products are placed in glass containers and are sold in supermarkets. Normally the preparation is placed in "bain marie". A drawback of these products is connected to the fact that they are subjected to a strong sterilisation treatment and thus contain thickeners such as for example starch, indispensable for guaranteeing the necessary structure to the product during sterilisation.

In this context, the technical task underpinning the present invention is to provide a food product for infants which enables rapid and easy conservation and preparation, while at the same time enabling provision of products that are scrupulously selected and controlled, the latter being a fundamental aspect for feeding a child. A further aim of the present invention is to facilitate administering the food product to a child.

A further aim of the present invention is to make available a food product which enables the product to be conserved together with its organoleptic properties, without the use of sterilisation and starches.

The above-specified technical task and the set aims are substantially attained by a food product and by a method comprising the technical characteristics set out in one or more of the appended claims.

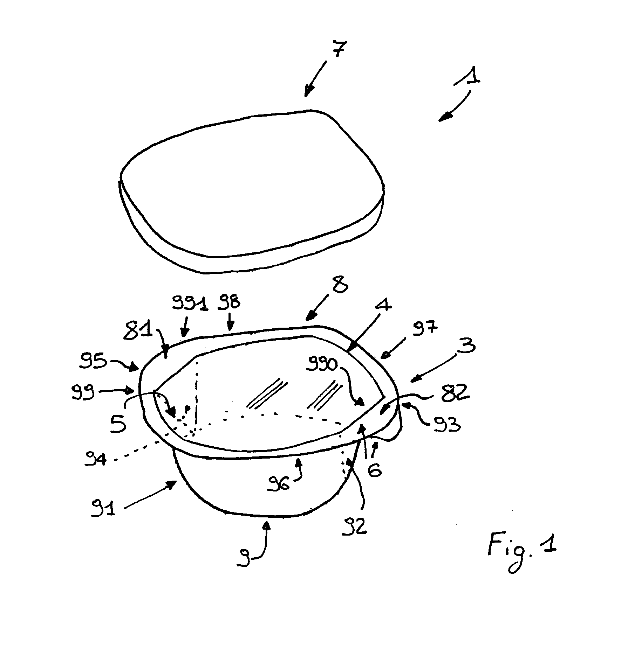

Further characteristics and advantages of the present invention will more clearly emerge from the detailed description, given by way of non-limiting example, of a preferred but not exclusive embodiment of a food product and a preparation method thereof. Figure 1 shows, by way of example, an at least partially exploded view of a product according to the present invention.

The object of the present invention is a packaged food product 1 for children.

Said food product 1 comprises food for children (also known as baby-food) which is advantageously deep-frozen (in figure 1 the food is not illustrated such as better to evidence elements lying behind it).

The fact that food is deep-frozen means that large use of additives and preservatives can be avoided without at the same time excessively penalising the product's ability to be conserved, and especially such as to maintain the product's nutritional and organoleptic characteristics unaltered. It is clear that avoiding large use of additives and preservatives is a fundamental aspect of the food, especially if destined for children.

The food product 1 further comprises a container 3 containing said food and positionable in a microwave oven for heating the content. The container 3 is advantageously cup-shaped and is preferably made of a plastic material. The cup container 3 comprises an opening 4 which enables access to a zone 5 housing said food. The container 3 is at least partly transparent; this enables the food to be seen without having to open the container 3.

The cup container 3 comprises a perimeter edge which surrounds said opening 4. At a first and a second zone 93, 95 of the edge 8, said edge exhibits a first and a second broadening 81, 82 which facilitate gripping. The first and the second zone 93, 95 are reciprocally opposite with respect to the centre of said opening 4.

The container 3 comprises:
- a bottom 9 opposite to said opening 4;
- a wall 91 which develops between said bottom 9 and the perimeter edge 8 which surrounds said opening 4. A first part 92 of said wall 91 develops starting from said first zone 93 of the edge 8 towards the bottom 9; a second part 94 of said wall 91 develops starting from said second zone 95 of the edge towards the bottom 9. The edge 8 comprises a plurality of consecutive sides 96, 97, 98, 99. The first part 92 of the wall 91 develops in proximity (starting from) a first connection 990 (or first connecting zone) between two consecutive sides of said edge 8 and defines a first bevelling of said wall 91. The second part 94 of the wall 91 develops at (starting from) a second connection 991 (or second connecting zone) between two consecutive sides of said edge 8 and defines a second bevelling of said wall 91. The first and the second bevelling are substantially parallel.

In other words the wall 91 surrounds a zone destined to house the food. The wall 91 comprises a first and a second bevelling along the development thereof, between which said zone destined to house the food is interposed. In this way gripping with one hand only is facilitated (seizing the container by placing the thumb and the index of a same hand respectively on the first and on the second bevel).

The opening 4 is substantially elliptical and exhibits, along a first straight line, a size comprised between 70 and 100 millimetres while it exhibits, along a second straight line perpendicular to said first straight line, a size comprised between 70 and 150 millimetres. This characteristic is very important, as it enables a user (for example the mother) to spoon-feed a child by removing (for example with a spoon) the food directly from said container 3 without having to place the food first in additional recipients.

The product 1 further comprises a film 6 that is heat-welded to the cup container 3 such as to occlude the opening 4 of the cup container 3.

The film 6 is removed such as to enable a user to gain access to the food.

The product 1 further comprises a flavour-saving lid 7 which surmounts the heat-welded film 6. The lid 7 is removed before removing the film 6. The lid 7 not only contributes to better conserving the product 1, it also enables preventing the film 6 (which is slimmer than the lid 7) from being broken during transport following impacts with bodies that might pierce it.

The product 1 is advantageously a single-portion serving (typically the overall weight of the container 3 and the food contained therein is about 200 grams).

The food can comprise:
- risotto (preferably 5-15% in weight), fish (preferably 5-10% in weight) and courgettes (preferably 40-55% in weight) or
- pasta (preferably 10-20% in weight) with chicken (preferably 7-20% in weight) and vegetables (preferably 40-50% in weight) or
- pasta (preferably 15-30% in weight), carrots and pumpkin (the vegetables being preferably 40-60% in weight) or
- pasta with tomato sauce;
- veal (preferably 9-11%) and vegetables (preferably 70-80%).

Said food advantageously comprises vegetables having low values of heavy metals and pesticides. In particular the vegetables exhibit one or more of the following characteristics:
- a concentration of cadmium of less than or equal to 0.03mg/kg;
- a concentration of lead of less than or equal to 0.04 mg/kg;
- a concentration of phytopharmaceutical substances of less than 10 parts per billion (in particular they are present in quantities that are not experimentally detectable);
- a concentration of nitrates of less than 200 mg/kg;
- a concentration of nitrites of less than or equal to 3 mg/kg.

The vegetables are certificated as treated according to certified integrated control, and are cultivated in Italy. The results are obtained by selecting vegetables originating from places of cultivation that are very stringently selected and which apply a strict protocol (cultivations distant from motorways and zones at high risk of environmental pollution). Further, the plant where the food is transformed is authorised for the production of baby food.

The vegetables do not contain ingredients, additives, flavourings, technological processing aids, supports for additives and flavourings constituted or deriving from genetically-modified products. The vegetables do not contain allergens in conformity with Directives 2000/13/CE, 2003/89/CE, 2006/142/CE. The product is not irradiated with ionisers in conformity with Directives 1999/2/CE and 1993/3/CE.

The object of the present invention is also a package, comprising:
- a first product 1 exhibiting one or more of the characteristics described herein above;
- a second product 1 exhibiting one or more of the characteristics described herein above;
- a paper-based packaging which houses (and keeps together) the first product and the second product 1.

A further characteristic of the product 1 is the absence of starches in the food.

The food in the container is advantageously deep-frozen. The vegetables are deep-frozen using I.Q.F. technology (individual quick freezing).

The object of the present invention is also a preparation method of food present in a food product 1 for children, said product 1 exhibiting one or more of the characteristics indicated herein above. The method comprises a step of heating the product 1 in a microwave oven, by positioning said container 3 and the food therein contained internally of the microwave oven. The step of heating the product 1 in a microwave oven advantageously takes about three minutes (while a traditional product in a jar requires 15-20 minutes for a "bain marie" preparation). This step advantageously comprises positioning the product 1 in the microwave oven before having removed said film 6 (but preferably after having removed the lid 7).

The method further comprises a step of spoon-feeding a child by removing the food directly from the container 3 itself.

The invention as it is conceived enables multiple advantages to be gained.

In particular it makes available a genuine product destined for infants which at the same time is practical and rapid. The guarantee of product traceability and the fact that the products used are specifically for infants are extremely interesting aspects.

The invention as it is conceived is susceptible to numerous modifications and variants, all falling within the ambit of the inventive concept characterising it. Further, all the details can be substituted by other technically-equivalent elements. In practice, all the materials used, as well as the dimensions thereof, might be of any type, according to needs.

## Claims

1. A packaged food product for children, **characterised in that** it comprises:
- deep-frozen food for children;
- a cup container (3) containing said food and positionable in a microwave oven such as to heat the content, said container (3) comprising an access opening (4) to a zone (5) housing the food.

2. The product according to claim 1, **characterised in that** it comprises a film (6) heat-welded to the cup container (3) such as to occlude the opening (4) of the cup container (3).

3. The product according to claim 2, **characterised in that** it comprises a lid (7) which surmounts the heat-welded film (6).

4. The product according to any one of the preceding claims, **characterised in that** said cup container (3) comprises a perimeter edge (8) which surrounds said opening (4); said edge (8), at a first edge zone and a second edge zone thereof (93, 95), exhibiting a first broadening and a second broadening (81, 82) which facilitate gripping, the first zone and the second zone (93, 95) being reciprocally opposite with respect to the centre of said opening (4).

5. The product according to any one of the preceding claims from 1 to 3, **characterised in that** said container (3) comprises:
- a bottom (9) opposite to said opening (4);
- a wall (91) which develops between said bottom (9) and a perimeter edge (8) which surrounds said opening (4); said edge (8) comprising a first zone and a second zone (93, 95), reciprocally opposite with respect to the centre of said opening (4);
- a first part (92) of said wall (91) developing starting from said first zone (93) of the edge (8) towards the bottom (9); a second part (94) of said wall (91) developing starting from said second zone (95) of the edge towards the bottom (9); said edge (8) comprising a consecutive plurality of sides (96, 97, 98, 99); said first part (92) of the wall (91) developing in proximity of a first connection (990) between two consecutive sides of said edge (8) and defining a first bevelling of said wall (91); said second part (94) of the wall (91) developing in proximity of a second connection (991) between two consecutive sides of said edge (8) and defining a second bevelling of said wall (91).

6. The product according to any one of the preceding claims, **characterised in that** said opening (4) is substantially elliptical and said opening (4) exhibits, along a first straight line, a size comprised between 70 and 100 millimetres while along a second straight line, perpendicular to said first straight line, said opening (4) exhibits a size comprised between 70 and 150 millimetres.

7. The product of any one of the preceding claims, **characterised in that** it is a single-portion serving.

8. The product according to any one of the preceding claims, **characterised in that** said food comprises vegetables which exhibit:
- a concentration of cadmium which is lower than or equal to 0.03mg/kg;
- a concentration of lead which is lower than or equal to 0.04mg/kg;
- a concentration of nitrates which is lower than 200 mg/kg;
a concentration of nitrites which is lower than or equal to 3 mg/kg.

9. The product of any one of the preceding claims, **characterised in that** said food comprises vegetables which have a concentration of phytopharmaceutical substances of less than 10 parts per billion.

10. A method for food preparation present in a food product (1) for children, realised according to one or more of claims from 1 to 9, **characterised in that** it comprises a step of heating the product (1) in a microwave oven, positioning said container (3) and the food contained therein internally of the microwave oven.

11. The method of claim 10, **characterised in that** it comprises a step of spoon-feeding the child by removing the food directly from the container (3) itself.
